Europäisches Patentamt

(19) **European Patent Office**

**Office européen des brevets**

(11) Numéro de publication: **0 086 123**
**B1**

(12) **FASCICULE DE BREVET EUROPEEN**

(45) Date de publication du fascicule du brevet:
09.04.86

(21) Numéro de dépôt: 83400113.3

(22) Date de dépôt: 18.01.83

(51) Int. Cl.⁴: **C 08 F 255/06**, C 08 F 287/00 //
(C08F255/06,
212:08), (C08F287/00, 212:08)

(54) Procédé de préparation de polymères greffes de styrène.

(30) Priorité: 10.02.82 FR 8202138

(43) Date de publication de la demande:
17.08.83 Bulletin 83/33

(45) Mention de la délivrance du brevet:
09.04.86 Bulletin 86/15

(84) Etats contractants désignés:
AT BE CH DE GB IT LI LU NL SE

(56) Documents cités:
FR - A - 2 022 489
GB - A - 2 074 174

Le dossier contient des informations techniques
présentées postérieurement au dépôt de la demande et
ne figurant pas dans le présent fascicule.

(73) Titulaire: **Société Chimique des Charbonnages S.A., Tour
Aurore Place des Reflets, F-92080 Paris La Défense
Cédex 5 (FR)**

(72) Inventeur: **Roussel, Robert, 3 avenue de Noyon,
F-62670 Mazingarbe (FR)**

(74) Mandataire: **Rieux, Michel et al, C d F Chimie S.A.
Service Propriété Industrielle Tour Aurore Place des
Reflets Cédex no. 5, F-92080 Paris la Défense 2 (FR)**

**0 086 123**

**Description**

La présente invention concerne un procédé de préparation de polymères greffés: elle a plus particulièrement pour objet un procédé de fabrication de copolymères greffés à base de styrène et d'un plymère caoutchouteux.

Le polystyrène est une matière thermoplastique qui grâce à la facilité avec laquelle il peut être obtenu et travaillé est largement utilisé dans l'industrie des plastiques. Malheureusement son emploi est limité par suite de son manque de tenue à la chaleur et de sa médiocre résistance au choc.

Afin d'améliorer ces propriétés on a proposé d'utiliser des copolymères de styrène avec d'autres monomères comme l'acrylonitrile ou les acrylates. On a aussi proposé d'utiliser des polymères greffés obtenus par polymérisation de styrène sur un polymère caoutchouteux. Comme polymères caoutchouteux on a proposé des caoutchoucs en grande partie saturés, par exemple des caoutchoucs dléthylène propylène et des caoutchoucs de'éthylène, propylène et d'un monomère polyinsaturé.

Cependant leur emploi présente de nombreuses difficultés: en particulier ces caoutchoucs faiblement insaturés ayant un faible taux de double liaison ne favorisent pas le greffage du styrène sur l'élastomère. On obtient alors des compositions qui présentent un taux de greffage, c'est-à-dire un taux de polystyrène greffé sur l'élastomère très faible, au plus voisin de 0,5. Par ailleurs, une observation au microscope permet de constater que les compositions obtenues sont constituées de gros globules de caoutchouc qui sont dispersés dans la composition sans aucune cohésion et dont la taille peut atteindre 10 à 15 µm.

La composition obtenue avec une telle dispersion n'a pas une microstructure fine et est donc peu brillante et l'aspect de surface des pièces est défecteux. En dehors des problèmes décrits ci-dessus et qui concernent la tenue à la chaleur et au vieillissement, la résistance au choc, le taux de greffage de polystyrène, ainsi que la microstructure, il est nécessaire pour obtenir des compositions présentant des propriétés intéressantes de résoudre le problème de la réticulation de l'élastomère.

Lorsque l'on polymérise du styrène en présence des matériaux élastomères du type éthylène-propylène comportant un monomère insaturé, on obtient des produits bruts greffés comprenant en particulier un copolymère greffé formé par réaction du caoutchouc avec le styrène monomère et des motifs caoutchouteux constitués par des motifs "pontés", c'est-à-dire des motifs de caoutchouc reliés entre eux par des liaisons chimiques. La densité de réticulation du caoutchouc "ponté" est exprimée par "l'indice de gonflement" qui est inversement proportionnel au taux de réticulation ce qui signifie que plus l'indice de gonflement est faible, plus la densité de réticulation est élevée.

Pour résoudre ces problèmes on a prosposé des procédés comportant des étapes réactionnelles sophistiquées du type: emploi de mélange de solvants spéciaux, oxydation partielle du caoutchouc avant greffage, polymérisation à étages multiples. On a aussi proposé l'emploi de polymères blocs hydrogénés (GB—A 2074174). Tous ces procédés ne sont pas satisfaisants et conduisent en particulier à des polymères greffés qui présentent encore souvent un faible taux de greffage ainsi qu'un taux de réticulation médiocre et une microstructure grossière.

On a maintenant trouvé un procédé de préparation permettant d'obtenir des polymères greffés qui ne présentent pas ces inconvénients.

La présente invention concerne un procédé de préparation de polymères greffés du styrène consistant à polymériser en suspension en deux étapes le styrène en présence d'un terpolymère caoutchouteux d'éthylène, de propylène et d'une troisième composante caractérisée en ce qu'on met en oeuvre des copolymères de styrène biséquencés, que les terpolymères caoutchouteux ont une viscosité au plus égale à 0,1 Pa.s à 20°C de préférence comprise entre 0,1 et 0,03 Pa.s, la viscosité des terpolymères caoutchouteux étant déterminée par dissolution de 5 parties en poids du caoutchouc dans 95 parties en poids de styrène, et que la première étape de polymérisation est conduite en présence d'une quantité d'eau comprise entre 0 et 45% en poids par rapport au poids de la phase organique.

La mise en oeuvre de procédé conforme à l'invention permet d'obtenir des polymères greffés présentant un taux de gel élevé compris entre 25 et 40 ainsi qu'un bon indice de gonflement au plus égal à 15, le plus souvent inférieur à 10, cet indice dénotant une bonne réticulation du polymère caoutchouteux. De plus, une observation microscopique des polymères greffés obtenus selon le procédé de l'invention permet de constater qu'ils présentent une bonne cohésion et une fine microstructure telle qu'au moins 90% des particules ont une taille inférieure à 5 µm ou une taille moyenne inférieure à 4 µm. Par ailleurs, la mise en oeuvre d'un tel procédé conduit à des polymères greffés qui présentent de bonnes caractéristiques mécaniques ainsi que de bonnes résistances au vieillissement et à la chaleur.

Pour la mise en oeuvre du procédé de l'invention on effectue de façon connue la polymérisation en suspension en deux stades opératoires. Le premier stade dans lequel on met à réagir le styrène, le terpolymère caoutchouteux et le copolymère de styrène biséquencé est appelé "polymérisation préalable" ou "prépolymérisation": il est réalisé à une température au plus égale à 100°C. Le mélange de réaction obtenu lors de ce premier stade est ensuite soumis à la polymérisation finale en suspension en présence d'agents de suspension et à une température comprise dans l'intervalle de 90 à 150°C. De façon connue le terpolymère caoutchouteux est à base d'éthylène, de propylène et d'une troisième composante. La troisième composante qui entre dans la composition du caoutchouc utilisé pour la fabrication des polymères greffés selon l'invention est choisie parmi l'hexadiène-1,4 dicyclopentadiène, le tricyclopentadiène, le 5-vinylnorbornène-2, le 5-éthylidène-norbornène-2, le 5-méthylène-norbornène-2, le

2

0 086 123

5 (2 propényl) norbornène-2, le 5 (5 hexényl) norbornène-2, le 4,7,8,9-tétrahydro-indène et l'isopropylidène tétrahydro-indène.

Une caractéristique essentielle du procédé de l'invention réside dans l'emploi de copolymères de styrène biséquencés au lieu de styrène seul. Ces copolymères de styrène biséquencés sont choisis parmi des copolymères styrène-butadiène ou des mélanges de copolymères styrène-butadiène et de styrène-éthylène. Les compolymères styrène-butadiène sont des produits que l'on trouve dans le commerce: ils ont des masses moléculaires voisines de 200.000, ils contiennent environ 38% en poids de styrène par rapport au poids total du copolymère dont 28% de styrène bloc. Selon l'invention ils sont utilisés à raison de 5 à 30% en poids par rapport à la quantité de terpolymère caoutchouteux. L'emploi de quantité supérieure à 30% en poids est sans intérêt car les propriétés mécaniques, en particulier la résistance au choc reste stationnaire. En outre la mise en oeuvre de quantité aussi élevée présente aussi l'inconvénient d'être peu économique. L'emploi de quantité inférieure à 5% en poids par rapport au terpolymère caoutchouteux conduit à des produits qui présente des nodules à granulométrie élevée.

Une forme préférée du procédé selon l'invention réside dans la mise in oeuvre de terpolymères caoutchouteux de faible viscosité comprise entre 0.03 et 0,1 Pa.s à 20°C. La quantité du terpolymère caoutchouteux mise en oeuvre est au plus égale à 20% en poids par rapport au poids de toute la phase organique constituée du styrène et des deux élastomères. La mise en oeuvre de terpolymère caoutchouteux présentant une viscosité élevée, c'est-à-dire supérieure à 0,1 Pa.s, provoque des perturbations dans la suspension ce qui limite la quantité mise en oeuvre.

La viscosité des terpolymères caoutchouteux décrite ci-dessus est la viscosité précédemment définie et qui correspond à la viscosité à 20°C d'une solution de terpolymère caoutchouteux constituée de 5 parties en poids pour 95 parties de styrène. Dans la suite de la description lorsque la viscosité des terpolymères caoutchouteux est évoquée, elle correspond toujours à cette définition.

Selon l'invention, l'étape de prépolymérisation est conduite en présence d'une quantité d'eau comprise entre 0 et 45% en poids par rapport au poids des constituants organiques. De préférence cette étape de prépolymérisation est conduite en l'absence totale d'eau ce qui permet d'obtenir des polymères greffés qui présentent une morphologie très régulière.

Le procédé de l'invention est conduit de la façon suivante. Dans un autoclave muni d'un dispositif de chauffage, d'un agitateur et d'un dispositif de refroidissement, on introduit le styrène, le terpolymère caoutchouteux, le copolymère biséquencé styrénique, et éventuellement de l'eau en faible quantité, au plus 45% en poids, si la prépolymérisation est conduite en voie légèrement humide. Le terpolymère caoutchouteux est utilisé en quantité au plus égale à 20% en poids par rapport au poids de la phase organique. On ajoute 0,5 à 2% en poids de catalyseurs par rapport au poids des produits organiques. Comme catalyseurs on utilise des peroxydes tels que le peroxyde de benzoyle, le peroxyde de dicumyle, le peroxyde de ditertiobutyle, le perbenzoate de tertio-butyle, le 2,5 dimethyl 2,5 bis (terbutyl-peroxy) hexyne-3, le tertio-butyl perhexanoate. Pendant la prépolymérisation on peut ajouter des agents de transfert de chaîne comme les marcaptans, par exemple le n-dodécyl mercaptan: ces composés sont ajoutés en quantités au plus égales à 0,2% par rapport à la phase organique. L'emploi d'additifs connus tel que triallycyanurate est aussi possible: ils sont utilisés en quantités au plus voisine de 0.2%. La prépolymérisation est conduite entre une température qui atteint au plus 100°C et 95°C à la fin de l'étape de prépolymérisation. Pendant 20 à 30 minutes environ on maintient après l'inversion des phases, le milieu sous l'action des forces de cisaillement à l'aide par exemple d'un agitateur à turbines.

Après la prépolymérisation on termine la polymérisation en suspension. On ajoute de le restant d'eau ou toute l'eau de la suspension si la prépolymérisation a été faite en phase sèche en quantité telle que le rapport phase organique/phase eau soit compris entre 0.8 et 1,3. Après l'addition d'eau, il est avantageux d'augmenter la température par paliers jusqu'au niveau final de 120 à 150°C. Pendant cette étape de polymérisation, il est possible d'ajouter des tensio-actifs et des agents de suspension telsque carbonate, phosphate, chlorure, en quantité respective au plus égale à 0,5%. On utilise comme catalyseurs des catalyseurs usuels tels que des peroxydes comme le 2,5 diméthyl 2,5 bis (terbutyl peroxy) hexyne-3 ou le peroxyde de ditertiobutyle; ces peroxydes peuvent être utilisés seuls ou en mélanges en quantités comprises entre 0,5 et 2% en poids, les quantités des additifs précités et des catalyseurs étant exprimées en poids par rapport au poids de toute la phase organique.

Les polymères de greffage obtenus selon le procédé de l'invention présentent de bonnes propriétés mécaniques ainsi qu'un bon comportement à la chaleur et an vieillissement. L'ensemble de ces propriétés associé à leur fine morphologie privilège ces polymères greffés dans les domaines d'application où l'on exige une bonne stabilité au vieillissement.

Les exemples suivants illustrent la présente invention:

Exemple 1

Dans un·autoclave muni d'un dispositif de chauffage, d'un agitateur et d'un dispositif de refroidissement, on introduit:

— 88 parties en poids de styrène,

— 9,6 parties en poids d'un terpolymère caoutchouteux à base d'éthylène, de propylène et d'un diène, 5 parties en poids dissous dans 95 parties en poids de styrène présentent une viscosité de 0,06 Pa.s à 20°C.

3

Ce terpolymère caoutchouteux est constitué de 44% en poids d'éthylène, de 45% en poids de propylène et de 11% en poids de 2-éthyl-norbornène.

— 2,4 parties en poids du copolymère biséquencé styrène-butadiène qui contient 28% de styrène bloc et présente un poids moléculaire de 200.000.

On additionne ensuite:

— 0,13 partie en poids de peroxyde de benzoyle

— 0,1 partie en poids de triallylcyanurate

— 0,125 partie en poids de n-dodécyl-mercaptan.

On soumet le mélange réactionnel à une première étape de polymérisation appelée prépolymérisation. Cette étape consiste d'abord à soumettre le mélange réactionnel à un chauffage par paliers de façon que sa température atteigne 92°C au bout de 60 minutes, puis à la maintenir sous agitation pendant 1 h 30 minutes à l'aide d'un agitateur à turbines.

Cette phase de prépolymérisation terminée on ajoute 120 parties en poids d'eau,

— 0,25 partie en poids de perbenzoate de t-butyl

— 0,6 partie en poids de peroxyde de ditertiobutyl

— 0,5 partie de 2,5 diméthyl-2,5 bis (terbutyl peroxy) hexyne-3.

Le mélange réactionnel est ensuite chauffé par paliers de façon à ce que sa température finale atteigne 150°C au bout de 6 h 30 minutes. On obtient alors une phase organique que l'on filtre et sèche.

La phase caoutchoutique du polymère obtenu a une granulométrie telle que 90% des particules ont une taille inférieure à 4,5 µm et une taille moyenne inférieure à 2 µm. Ses caractéristiques sont résumées dans le tableau 1.

Le taux de gel qui exprime le taux de phase réticulée, c'est-à-dire la quantité de polystyrène greffé sur le terpolymère caoutchouteux, est déterminé en agitant à froid dans du toluène, le copolymère greffé puis en centrifugeant l'ensemble ce qui permet de déterminer la quantité de gel insoluble dans le toluène. La masse sèche du polymère insoluble est déterminée en traitant sous vide le gel obtenu précédemment. Le pourcentage de gel par rapport à la prise d'essai exprime le taux de gel.

L'indice de gonflement qui permet d'exprimer la densité de réticulation est égal au rapport de la masse de gel à la résine sèche.

Le choc Izod est déterminé selon la norme ASTM D 256,

le module en traction suivant la norme ASTM D 63872 et la charge en rupture selon la norme ASTM D 63872.

TABLEAU 1

| Taux de gel | Indice de gonflement | CHOC IZOD Kg/cm/cm | Module en traction Kg/cm2 | Charge à la rupture Kg/cm2 |
|---|---|---|---|---|
| 29,61 | 7,78 | 3,3 | 18 200 | 285 |

Exemple 2

L'exemple 1 est répété mais en réalisant l'étape de prépolymérisation en présence d'eau et non plus en phase sèche. On utilise le mêmes réactifs et les mêmes quantités que dans l'exemple 1 mais on ajoute en plus 30 parties en poids d'eau.

L'étape de prépolymérisation terminée on poursuit comme dans l'exemple 1 par l'étape de polymérisation qui est réalisée par addition préalable de 90 parties en poids d'eau.

Après traitement du polymère comme dans l'exemple 1 on obtient un produit dont la granulométrie est telle que 90% des particules ont une taille inférieure à 2 µm et une taille moyenne de 1,5 µm. Les autres caractéristiques du polymère sont résumées dans le tableau 2.

TABLEAU 2

| Taux de gel | Indice de gonflement | CHOC IZOD Kg/cm/cm | Module en traction Kg/cm2 | Charge à la rupture Kg/cm2 |
|---|---|---|---|---|
| 38,69 | 7,17 | 3,2 | 16 300 | 250 |

Exemple 3

L'exemple 2 est répété mais en remplaçant le copolymère biséquencé styrène-butadiène par un mélange de copolymère bi-séquencé styrène-butadiène de l'exemple 1 et styrène-éthylène qui contient 28% de styrène-bloc et présente un poids moléculaire de 100.000. On utilise respectivement 1,2 parties en poids de ces coplymères. Après traitement comme dans l'exemple 2 on obtient un produit dont les

4

**0 086 123**

particules ont une taille moyenne égale à 3,8 µm. Les autres caractéristiques du polymère sont résumées dans le tableau 3.

TABLEAU 3

| Taux de gel | Indice de gonflement | CHOC IZOD Kg/cm/cm | Module en traction Kg/cm2 | Charge à la rupture Kg/cm2 |
|---|---|---|---|---|
| 30,35 | 8,51 | 4,1 | 16 000 | 260 |

Exemple 4

A titre de comparaison l'exemple 2 est répété mais en supprimant les 2,4 parties en poids du copolymère biséquencé styrène-butadiène. On met alors en oeuvre 12 parties en poids du même terpolymère caoutchouteux de l'exemple 2 au lieu de 9,6 parties. Après traitement on obtient un produit dont la granulométrie est très dispersée, la taille maximum des particules atteignant 15 µm, la taille moyenne 7 µm.

Les propriétés du polymère sont résumées dans le tableau 4.

TABLEAU 4

| Taux de gel | Indice de gonflement | Module en traction Kg/cm2 | Charge à la rupture Kg/cm2 |
|---|---|---|---|
| 21,65 | 14,34 | 15 200 | 220 |

Exemple 5

L'exemple 2 est répété mais en remplaçant le terpolymère caoutchouteux de l'exemple 2 qui présente une viscosité de 0,06 Pa.s à 20°C par un terpolymère caoutchouteux qui présente la même composition chimique que celui de l'exemple 1 mais une viscosité de 0,15 Pa.s à 20°C.

Après traitement on obtient polymère dont les particules ont une taille moyenne de 5,2 µm, 90% ayant une taille inférieure à 10 µm.

Ses caractéristiques sont résumées dans le tableau 5.

TABLEAU 5

| Taux de gel | Indice de gonflement | CHOC IZOD Kg/cm/cm | Module en traction Kg/cm2 | Charge à la rupture Kg/cm2 |
|---|---|---|---|---|
| 36,73 | 7,15 | 2,9 | 16 700 | 250 |

Exemple 6

L'exemple 2 est répété mais en utilisant un terpolymère caoutchouteux qui présente une viscosité de 0,21 Pa.s.

Après traitement on obtient un polymère dont la granulométrie est telle que les particules ont une taille moyenne de 7 µm, 90% ayant une taille inférieure à 40 µm. Ses caractéristiques sont résumées dans le tableau 6.

TABLEAU 6

| Taux de gel | Indice de gonflement | CHOC IZOD Kg/cm/cm | Module en traction Kg/cm2 | Charge à la rupture Kg/cm2 |
|---|---|---|---|---|
| 34,82 | 7,46 | 3,1 | 17 300 | 250 |

**Revendications**

1. Procédé de préparation de polymères greffés du styrène consistant à polymériser en suspension en deux étapes le styrène en présence d'un terpolymère caoutchouteux d'éthylène, de propylène et d'une

5

troisième composante caractérisé en ce qu'on met en oeuvre des copolymères de styrène biséquencés, que les terpolymères caoutchouteux ont une viscosité au plus égale à 0,1 Pa.s à 20°C et de préférence comprise entre 0,1 et 0,03 Pa.s, la viscosité des terpolymères caoutchouteux étant déterminée par dissolution de 5 parties en poids du caoutchouc dans 95 parties en poids de styrène, et que la première étape de polymérisation est conduite en présence d'une quantité d'eau comprise entre 0 et 45% en poids par rapport au poids de la phase organique.

2. Procédé selon la revendication 1 caractérisé en ce que les copolymères de styrène biséquencés sont choisis parmi les copolymères styrène-butadiène ou des mélanges de copolymères styrène-butadiène et de styrène-éthylène.

**Patentansprüche**

1. Verfahren zur Herstellung von Styrol-Pfropfpolymeren, das darin besteht, daß das Styrol in Gegenwart eines kautschukartigen Terpolymers aus Äthylen, Propylen und einer dritten Komponente in Suspension zweistufig polymerisiert wird, dadurch gekennzeichnet, daß man Zweierblock-Styrolcopolymere einsetzt, daß die kautschukartigen Terpolymere eine Viskosität von höchstens 0,1 Pa.s bei 20°C und vorzugsweise zwischen 0,1 und 0,03 Pa.s besitzen, wobei die Viskosität der kautschukartigen Terpolymere durch Dissolution von 5 Gewichtsteilen des Kautschuks in 95 Gewichtsteilen Styrol bestimmt wird, und daß die erste Polymerisationsstufe in Gegenwart einer zwischen 0 und 45 Gew.-% in bezug auf das Gewicht der organischen Phase ausmachenden Wassermenge ausgeführt wird.

2. Verfahren nach Anspruch 1, dadurch gekennzeichnet, daß die Zweierblock-Styrolcopolymere ausgewählt sind aus den Styrol/Butadien-Copolymeren oder den Mischungen aus Styrol/Butadien- und Styrol/Äthylen-Copolymeren.

**Claims**

1. Process for the preparation of styrene graft polymers consisting in polymerising the styrene in suspension in two stages in the presence of a rubber terpolymer of ethylene, propylene and a third component, characterised in that bi-sequential styrene co-polymers are used, that the rubber terpolymers have a viscosity at least equal to 0.1 Pa.s at 20°C and preferably between 0.1 and 0.03 Pa.s, the viscosity of the rubber terpolymers being determined by dissolving 5 parts by weight of rubber in 95 parts by weight of styrene, and that the first stage of polymerisation is carried out in the presence of a quantity of water between 0 and 45% by weight relative to the weight of the organic phase.

2. Process according to claim 1, characterised in that the bisequential styrene co-polymers are selected from styrene-butadiene copolymers or from mixtures of styrene-butadiene and styrene-ethylene.